# FASCICULE DE BREVET EUROPEEN

(11) **EP 1 035 265 B1**
(45) Date de publication et mention de la délivrance du brevet: **09.11.2005**
(21) Numéro de dépôt: 00400633.4
(22) Date de dépôt: 08.03.2000
(51) Int. Cl.: E04B 9/20, F16L 55/033

(54) **Ensemble d'attache anti-vibrations à deux degrés de liberté**
Antischwingungsbefestigungsmittel mit zwei Freiheitsgraden
Anti-vibration fastening device with two degrees of freedom

(30) Priorité: 09.03.1999 FR 9902885
(43) Date de publication de la demande: 13.09.2000
(73) Titulaire: PLACOPLATRE, 92150 Suresnes (FR)
(72) Inventeur: Funten, Marc, 77290 Mitry le Neuf (FR); Aflalo, Eric, 92100 Boulogne (FR); Truquin, Patrick, 60430 Villiers sous St. Leu (FR); Dupont, Gérard, 85470 Breme-sur-Mer (FR); Hamelin, Yves, 91000 Evry (FR)
(74) Mandataire: Santarelli

(56) Documents cités:
- FR-A- 2 099 008
- FR-A- 2 327 475
- GB-A- 1 149 757

## Description

La présente invention concerne un ensemble d'attache anti-vibrations.

Plus précisément, elle concerne un ensemble d'attache anti-vibrations destiné à relier deux éléments, que ceux-ci soient disposés l'un à côté de l'autre, ou l'un au dessus de l'autre.

Dans ce dernier cas, l'ensemble d'attache est alors un ensemble de suspente anti-vibrations destiné à suspendre un élément porté à un élément porteur, tel que par exemple un faux-plafond à une structure porteuse telle qu'une dalle en ciment ou une toiture, ou autre, plus généralement dans le domaine de la construction ou l'aménagement de locaux.

Pour faciliter la compréhension, les deux éléments sont désignés respectivement par "porteur" et "porté" même si l'un ne porte pas l'autre, comme cela peut être le cas lorsqu'ils sont disposés l'un à côté de l'autre, et non l'un au dessus de l'autre.

Un tel ensemble comporte généralement un bloc élastique muni de deux portées à distance l'une de l'autre qui coopèrent chacune avec un moyen d'attelage pour atteler l'ensemble, d'une part, à l'élément porteur et, d'autre part, à l'élément porté.

Jusqu'ici, pour assurer la fonction ci-dessus, de tels ensembles comportent un nombre important de pièces indépendantes à relier sur place : ceci grève le prix de revient et de pose de ces ensembles tout en rendant mal aisée leur mise en oeuvre.

Par ailleurs, si le réglage en hauteur de l'élément porté par rapport à l'élément porteur est assuré dans tous les cas, lorsque ces éléments ne sont pas parallèles, le réglage angulaire est inexistant ou difficile à assurer.

FR-A-2 099 008 décrit un ensemble conforme au préambule de la revendication 1.

La présente invention a pour but de proposer un ensemble de suspente du type ci-dessus qui soit simple, facilement réglable selon deux degrés de liberté, en hauteur et en angle, et dont la mise en oeuvre soit aisée, l'ensemble d'attache constituant pratiquement en soi une attache d'une seule pièce.

Selon l'invention, un ensemble d'attache anti-vibrations destiné à relier un élément dit porté à un élément dit porteur, comportant un bloc élastique et des moyens d'attelage, le bloc étant constitué d'au moins un bloc de matière élastique, muni de deux portées à distance l'une de l'autre, ces portées coopérant chacune avec un moyen d'attelage pour atteler l'ensemble, d'une part, à l'élément porteur et, d'autre part, à l'élément porté, l'un des moyens d'attelage dit premier moyen d'attelage étant constitué d'un organe dit porteur coopérant avec l'une des portées du bloc élastique dite première portée et portant intérieurement un taraudage avec lequel est adaptée à coopérer une tige filetée attelable à l'un des éléments porteur et porté, est caractérisé par le fait que l'autre moyen d'attelage dit second moyen d'attelage est constitué d'un corps présentant au moins une portion de rail courbe coopérant avec l'autre portée dite seconde portée du bloc élastique, ledit corps comportant en outre des moyens d'accrochage par lesquels il est attelé à l'autre des éléments porté et porteur, et par le fait que le corps peut tourner par rapport au bloc élastique de telle sorte que l'élément attelé au corps puisse être incliné par rapport à la tige filetée.

De préférence, la première portée du bloc élastique est une face plane externe qu'il présente et dans laquelle débouche un puits central qui traverse le bloc élastique, l'organe porteur du premier moyen d'attelage étant en forme de disque et solidaire d'un tube muni intérieurement d'un taraudage pour recevoir la tige filetée.

Avantageusement, le tube porte, au voisinage de son extrémité opposée à celle par laquelle il est solidarisé à l'organe porteur, une collerette destinée à immobiliser axialement le tube par rapport au bloc élastique.

En variante, la première portée du bloc élastique est la face dirigée vers l'intérieur d'un passage transversal que comprend le bloc élastique et dans lequel est introduit transversalement l'organe porteur du premier moyen d'attelage, le taraudage porté par ledit organe porteur étant au droit d'un puits central qui traverse le bloc élastique et qui est adapté à recevoir la tige filetée.

Avantageusement, le passage transversal est de forme générale parallélépipédique et l'organe porteur est une plaque ; en variante, le passage transversal est de forme générale cylindrique et l'organe porteur est une douille.

Selon une forme de réalisation préférée, la seconde portée du bloc élastique est constituée de deux demi-secondes portées placées latéralement de part et d'autre du bloc élastique, le corps du second moyen d'attelage présentant deux portions de rail, chaque demi-seconde portée coopérant chacune avec une portion de rail ; le corps du second moyen d'attelage comprend deux flasques ayant des rebords courbes en regard l'un de l'autre constituant chacun une portion de rail ; en variante, le corps du second moyen d'attelage comprend deux flasques ayant des rebords tronconiques en regard l'un de l'autre constituant chacun une portion de rail.

De préférence, chaque rebord s'étend selon un angle supérieur à 180 degrés, avantageusement de l'ordre de 280 degrés.

Avantageusement, le corps du second moyen d'attelage comprend deux flasques dont les tranches externes constituent chacune une portion de rail.

Avantageusement, chaque demi-seconde portée est la face externe des extrémités latérales d'une plaque d'appui supportée par le bloc élastique ; la plaque d'appui présente latéralement, au droit de chaque demi-seconde portée, au moins deux ergots parallèles à et à distance de ladite demi-seconde portée grâce auxquels le bloc élastique est guidé et supporté par le corps du second moyen d'attelage.

En variante, chaque demi-seconde portée est la face externe des extrémités latérales du bloc élastique.

Selon une autre variante, chaque demi-seconde portée est une face d'une rainure latérale ménagée dans le bloc élastique.

De préférence, le bloc élastique est en forme de secteur ; il peut être de forme parallélépipédique, ou de forme cylindrique.

Avantageusement, le bloc élastique est en une seule pièces ; en variante, il est en deux pièces.

Avantageusement, le corps du second moyen d'attelage est en forme générale d'un U dont les ailes sont constituées par les flasques et dont l'âme porte les moyens d'accrochage de l'élément de suspente.

De préférence, les moyens d'accrochage sont agencés pour coopérer avec un profilé, par exemple en forme de I et comprennent deux paires de pattes dont chaque paire comprend deux pattes se faisant face, destinées à chevaucher les bords de l'aile du profilé.

Avantageusement, le corps est également adapté à recevoir l'âme d'un adaptateur d'accrochage en U dont les ailes sont découpées en sorte de pouvoir s'adapter à l'une des ailes en U d'un profilé en oméga.

De préférence, les moyens d'accrochage sont agencés pour coopérer avec une aile d'un profilé, par exemple en forme de I, et comprennent deux pattes destinées à chevaucher chacune un bord de l'aile du profilé, les deux pattes étant à une distance l'une de l'autre au moins égale à la largeur de l'aile du profilé en sorte que le chevauchement est obtenu par rotation du corps par rapport au profilé.

Avantageusement, les moyens d'accrochage du corps sont agencés pour coopérer avec un profilé en forme de oméga et comprennent deux ailes découpées en sorte de pouvoir s'adapter à l'une des ailes en U du profilé.

De préférence, le corps est d'une seule pièce ; en variante, il est en deux pièces.

La présente invention a également pour objets un bloc élastique, un organe porteur et un corps pour suspente tels que ceux de l'ensemble ci-dessus.

Pour mieux faire comprendre l'objet de l'invention, on va en décrire maintenant, à titre d'exemple, purement illustratif et non limitatif, un mode de réalisation représenté sur les dessins annexés.

Sur ces dessins :
- la figure 1 est une vue en perspective d'un ensemble d'attache selon l'invention, en forme d'ensemble de suspente ;
- la figure 2 est une vue selon la flèche II de la figure 1 ;
- la figure 3 est une vue selon la flèche III de la figure 1 ;
- la figure 4 est une vue représentant le tube seul de l'ensemble des figures 1 à 3 ;
- la figure 5 est analogue à la figure 1 et montre une variante de moyens d'accrochage ;
- la figure 6 est analogue à la figure 1 et montre une variante dans laquelle les moyens d'accrochage sont portés par un adaptateur ;
- la figure 7 est analogue à la figure 1 et montre une autre variante de moyens d'accrochage ;
- la figure 8 est une vue partielle analogue à la figure 2 montrant une variante de bloc élastique ;
- la figure 9 est une vue partielle éclatée montrant encore une variante ;
- la figure 10 illustre l'assemblage des deux demi-blocs de la figure 9 ;
- la figure 11 est une vue analogue à la figure 1 montrant encore une autre variante d'un ensemble selon l'invention ;
- la figure 12 est une vue en perspective analogue à la figure 1 et représentant une variante ;
- les figures 13 à 15 montrent une variante de plaque d'appui, la figure 14 étant une vue selon la flèche XIV de la figure 15 elle-même une vue selon la flèche XV de la figure 13 ;
- les figures 16 et 17 montrent une variante du corps du second moyen d'attelage, la figure 17 étant une vue selon la flèche XVII de la figure 16, le bloc élastique ayant été rajouté ;
- les figures 18 à 20 montrent encore une variante de plaque d'appui, ici entièrement plane, le bloc élastique qu'elle supporte ayant été dessiné sur la figure 19 qui est une vue latérale de la figure 18, la plaque d'appui ayant été représentée seule, vue de dessus, sur la figure 20 ;
- la figure 21 est une vue schématique éclatée en perspective montrant l'application de l'invention à la liaison de deux cloisons globalement verticales.

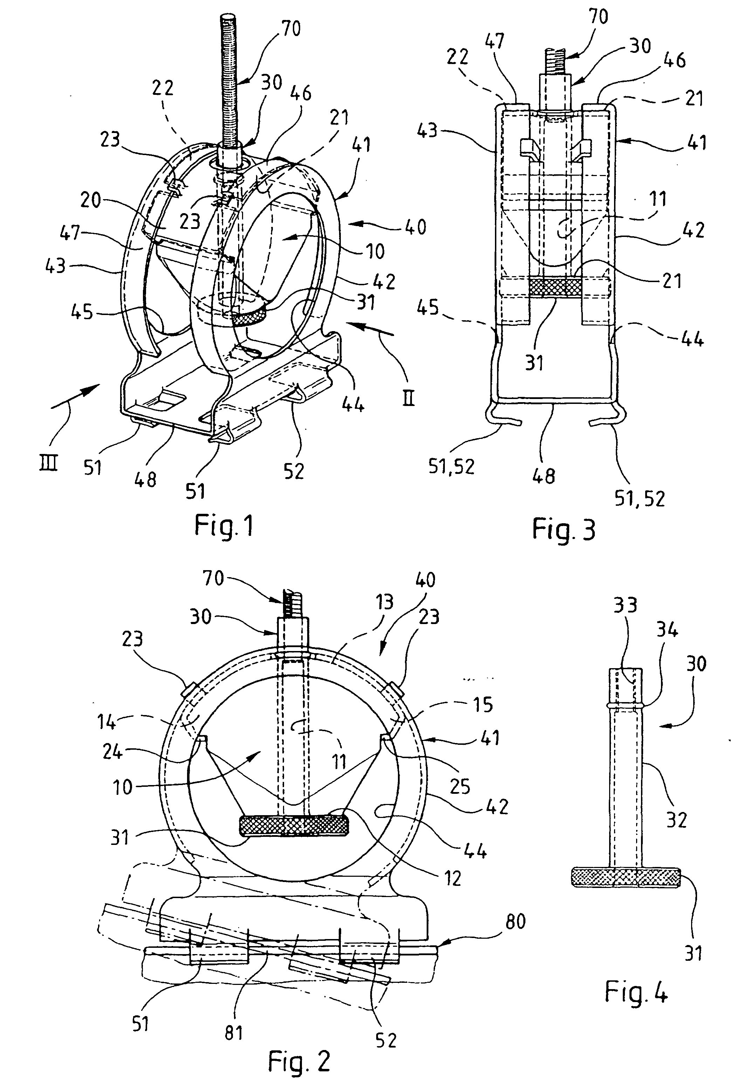

En se reportant aux figures 1 à 4, on voit qu'un ensemble d'attache anti-vibrations à deux degrés de liberté comporte un bloc de matière élastique 10, un premier moyen d'attelage 30 et un second moyen d'attelage 40.

Ici, le bloc élastique 10 est en forme générale de secteur circulaire et est traversé radialement par un puits central 11 qui débouche dans une face plane externe 12 qui limite le bloc élastique 10 à l'opposé de sa face externe cylindrique 13, laquelle face cylindrique 13 est recouverte d'une plaque d'appui 20 métallique supportée par le bloc élastique 10.

Le premier moyen d'attelage 30 est constitué d'un organe porteur 31, ici en forme de disque, solidaire d'un tube 32 muni intérieurement d'un taraudage 33.

Le second moyen d'attelage 40 est constitué d'un corps 41 ayant la forme générale d'un U dont les ailes sont constituées chacune d'un flasque 42, 43 présentant chacun une ouverture centrale circulaire 44, 45 respectivement ; chacun des flasques 42, 43 est muni d'un rebord cylindrique 46, 47 respectivement ; les deux rebords 46, 47 s'étendent ici globalement perpendiculairement au plan des flasques 42, 43 en étant dirigés, intérieurement, l'un vers l'autre ; ils s'étendent circonférentiellement sur plus de 180 degrés, en tout cas sur moins de 360 degrés en sorte qu'au voisinage du raccordement des flasques 42, 43 à l'âme 48 du corps 41 en U il n'y a pas de rebord.

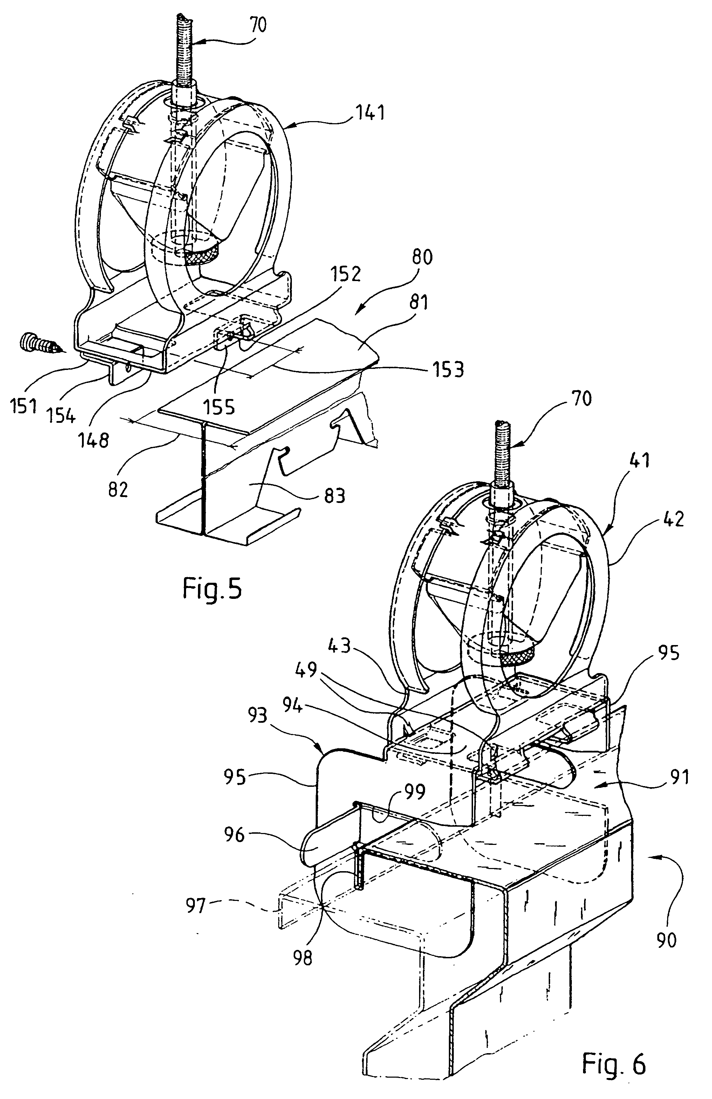

L'âme 48 du corps 41 en U porte des moyens d'accrochage qui comprennent ici deux paires de pattes 51, 52 issues d'un découpage de l'âme 48 ; les pattes 51, 52 sont décalées vers l'extérieur en s'étendant parallèlement à l'âme 48 ; chaque paire 51, 52 de pattes comprend deux pattes qui se font face destinées à chevaucher les bords de l'aile 81 d'un profilé 80, figure 2, l'aile 81 du profilé 80 ayant ses bords qui s'étendent entre les pattes 51, 52 et l'âme 48 du corps 41 ; le profilé 80 est mieux visible sur la figure 5 où il est partiellement représenté en perspective. Grâce à cette disposition, il est facile de monter le corps 41 sur un tel profilé 80.

L'organe porteur 31 du premier moyen d'attelage 30 coopère avec une première portée du bloc élastique 10 constituée ici par la face plane externe 12 du bloc élastique 10.

Le corps 41 du second moyen d'attelage 40 coopère avec une seconde portée du bloc élastique 10 : plus précisément, cette seconde portée est constituée de deux demi-secondes portées placées latéralement de part et d'autre du bloc élastique 10 et formées chacune par la face externe des extrémités latérales 21, 22 qui bordent la plaque d'appui 20, laquelle recouvre la face externe cylindrique 13 du bloc élastique 10. L'épaisseur mesurée latéralement du bloc élastique 10 est de l'ordre de grandeur de la distance qui sépare, selon cette direction, les flasques 42, 43 du corps 41 en sorte que, lorsque le bloc élastique 10 est introduit entre les flasques 42, 43 grâce aux ouvertures 44, 45 dimensionnées en conséquence, cette seconde portée coopère avec la face interne des rebords 46, 47 cylindriques desdits flasques 42, 43.

Une tige filetée 70 est introduite dans le tube 32 du premier moyen d'attelage 30, en coopérant avec le taraudage 33 qu'il présente.

L'ensemble d'attache selon l'invention, qui vient d'être décrit, est utilisé comme suit.

Sur les figures, l'ensemble est représenté dans une position pour laquelle la tige filetée 70 émerge à la partie haute de l'ensemble dont l'âme 48 du corps 41 est en partie basse et globalement perpendiculaire à la tige filetée 70 ; ainsi, la tige filetée peut être attelée, par tout moyen approprié, à un élément porteur, l'élément porté étant ici le profilé 80 ; par coopération des portées décrites ci-dessus, le profilé 70 est élastiquement suspendu à l'élément porteur ; en tournant l'organe porteur 31 en forme de disque, dont la surface externe peut être moletée, comme représenté, pour faciliter cette opération, on voit qu'on peut régler la hauteur du profilé 80 par rapport à l'élément porteur ; de plus, en faisant tourner le corps 41 par rapport au bloc élastique 10, grâce aux portions de rail cylindriques 46 et 47, on peut incliner à volonté le profilé 80 par rapport à la tige filetée 70, comme montré en traits mixtes sur la figure 2.

Bien entendu, la structure peut être inversée, le profilé 80 constituant l'élément porteur et la tige filetée 70 étant attelée à l'élément porté.

Comme on le voit, l'ensemble d'attache, ici de suspente, est compact, simple à réaliser et facile à mettre en oeuvre, grâce en particulier à ses deux degrés de liberté, en hauteur et en angle.

Pour faciliter encore sa mise en oeuvre, on peut faire supporter le bloc élastique 10 par le corps 41 ; pour ce faire, et comme cela est représenté sur les figures, la plaque d'appui 20 présente latéralement, au droit de chaque demi-seconde portée 21 et 22, des ergots 23, ici deux paires d'ergots, obtenus par découpe et déformation des bords de la plaque d'appui 20, s'étendant extérieurement à distance de celle-ci en sorte qu'ils recouvrent partiellement les rebords cylindriques 46, 47 du corps 41, en étant de préférence parallèles à ceux-ci : ainsi, le bloc élastique 10 est guidé et supporté par le corps 40 ; pour la mise en place du bloc élastique 10, il suffit, après l'avoir introduit à travers l'une des ouvertures 44 ou 45 et placé entre les flasques 42 et 43, de le mettre dans la position inverse de celle représentée, ergots 23 proches de l'âme 48 du corps 41, et de le faire tourner de 180 degrés environ en veillant à introduire les extrémités des rebords 46 et 47 sous les ergots 23. Ceci est possible grâce au fait que les rebords 46 et 47 ne s'étendent pas sur 360 degrés mais sont interrompus au voisinage de l'âme 48 du corps 41.

Il est possible, si l'on souhaite éviter un écartement des rebords 46, 47 sous l'effet de la charge supportée par le corps 41 du moyen d'attelage 40, de prévoir de part et d'autre de la plaque d'appui 20 des retours en U dans lesquels prendrait place la périphérie interne des flasques 42, 43.

Ici, pour supporter la plaque d'appui 20, le bloc élastique 10 présente à ses extrémités des saillies longitudinales 14, 15 autour desquelles sont repliés les bords longitudinaux 24, 25 de la plaque d'appui 20.

Bien entendu, la plaque d'appui 20 peut être omise ; ainsi, selon une variante non représentée, le bloc élastique 10 coopère directement, par sa face externe cylindrique 13, avec les rebords cylindriques 46, 47 du corps 41 et chaque demi-seconde portée est l'extrémité latérale de cette face externe 13.

Selon une autre variante également non représentée, pour faire supporter le bloc élastique 10 sans plaque d'appui 20 par le corps 41, le bloc élastique 10 comporte sur ses faces latérales des rainures cylindriques dans lesquelles s'engagent les rebords cylindriques 46, 47 du corps 41, chaque demi-seconde portée étant constituée par une face interne d'une rainure, la face interne inférieure lorsque l'ensemble de suspente est disposé de manière analogue à celle représentée sur les figures 1 à 3.

La figure 5 montre une variante de moyens d'accrochage ménagés dans l'âme 148 du corps 141 ; selon cette variante, ils sont constitués de deux pattes 151, 152 analogues aux pattes 51, 52 de la variante précédente et destinées, elles-aussi, à chevaucher chacune un bord de l'aile 81 du profilé 80 en forme de I ; les deux pattes 151, 152 ne se font pas face l'une à l'autre mais sont décalées l'une par rapport à l'autre en étant à une distance 153 au moins égale à la largeur 82 de l'aile 81 du profilé 80 ; grâce à cette disposition, l'accrochage par chevauchement est obtenu par rotation du corps 141 par rapport au profilé 80 ; pour le maintien du corps 141 par rapport au profilé 80 dans cette position d'accrochage, les pattes 151, 152 sont prolongées par des retours 154, 155 solidarisés à l'âme 83 du profilé 80, par exemple par vissage.

Lorsque l'élément porteur ou porté est un profilé en oméga 90, figure 6, au lieu d'un profilé en I, le même corps 41 ou 141 peut être utilisé ; ainsi, comme visible sur la figure 6, il suffit d'associer audit corps un adaptateur d'accrochage, du genre de l'adaptateur 93. L'adaptateur 93 est en forme générale de U dont l'âme 94 est placée à l'intérieur du corps 41 sur l'âme 48 dudit corps ; pour faciliter les manipulations, l'âme 94 de l'adaptateur 93 est maintenue contre l'âme 48 du corps 41 par encliquetage, grâce à des ergots 49 prévus sur les flasques 42, 43 du corps 41 à une hauteur appropriée. Les ailes 95 de l'adaptateur 93 sont découpées pour s'adapter au profil en coupe de l'aile 91 en U du profilé 90 en oméga. A la faveur de la découpe 99, une languette 96 est ménagée, dont la largeur est au moins égale à la hauteur du rebord 97 à angle droit de l'aile 91 en U du profilé 90 en sorte que ce rebord 97 peut être introduit dans la découpe 99 puis descendu dans une fente 98 que présente les ailes 95 de l'adaptateur 93 et qui s'étend perpendiculairement à la découpe 99 dans laquelle elle débouche ; pour cette opération de mise en place, la languette 96 est pliée perpendiculairement à l'aile 95 ; il suffit ensuite de la rabattre dans le plan de l'aile 95, comme montré en traits mixtes sur la figure, pour immobiliser l'adaptateur 93 par rapport au profilé 90.

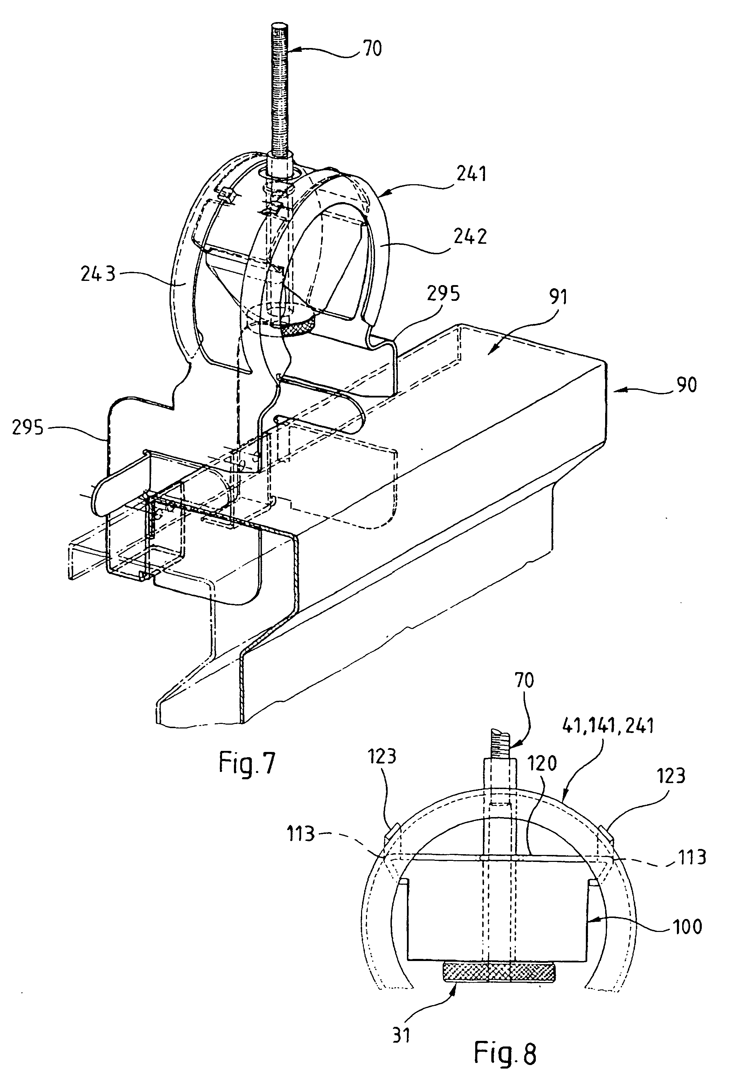

Bien entendu, il est également possible de doter le second moyen d'attelage de moyens d'accrochage adaptés spécifiquement à un profilé en forme de oméga. Ainsi, l'ensemble de suspente représenté sur la figure 7 comporte un corps 241 analogue aux corps 41 et 141 précédents sauf que les deux flasques 242 et 243 sont reliés par deux ailes 295 découpées pour s'adapter au profil en coupe de l'aile 91 en U du profilé 90 en forme de oméga et analogues aux ailes 95 de l'adaptateur 93 de la figure 6.

Dans toutes les variantes qui viennent d'être décrites, le bloc élastique 10 est en forme de secteur ; selon la variante de la figure 8, le bloc élastique 100 est de forme générale parallélépipédique ; ici, la seconde portée du bloc élastique 100 est constituée par les arêtes latérales, avantageusement arrondies, du bloc élastique, qui s'étendent selon la largeur dudit bloc à sa partie supérieure, par rapport aux figures, ou, comme représenté, par les arêtes 113 correspondantes d'une plaque d'appui 120 qui recouvre la partie supérieure du bloc élastique 100 ; la plaque d'appui 120 comporte également des ergots 123 analogues aux ergots 23 précédemment décrits.

Comme on l'aura compris, le bloc élastique 120 peut coopérer avec tout corps du second moyen d'attelage, tel que les corps 41, 141 ou 241 des variantes précédentes.

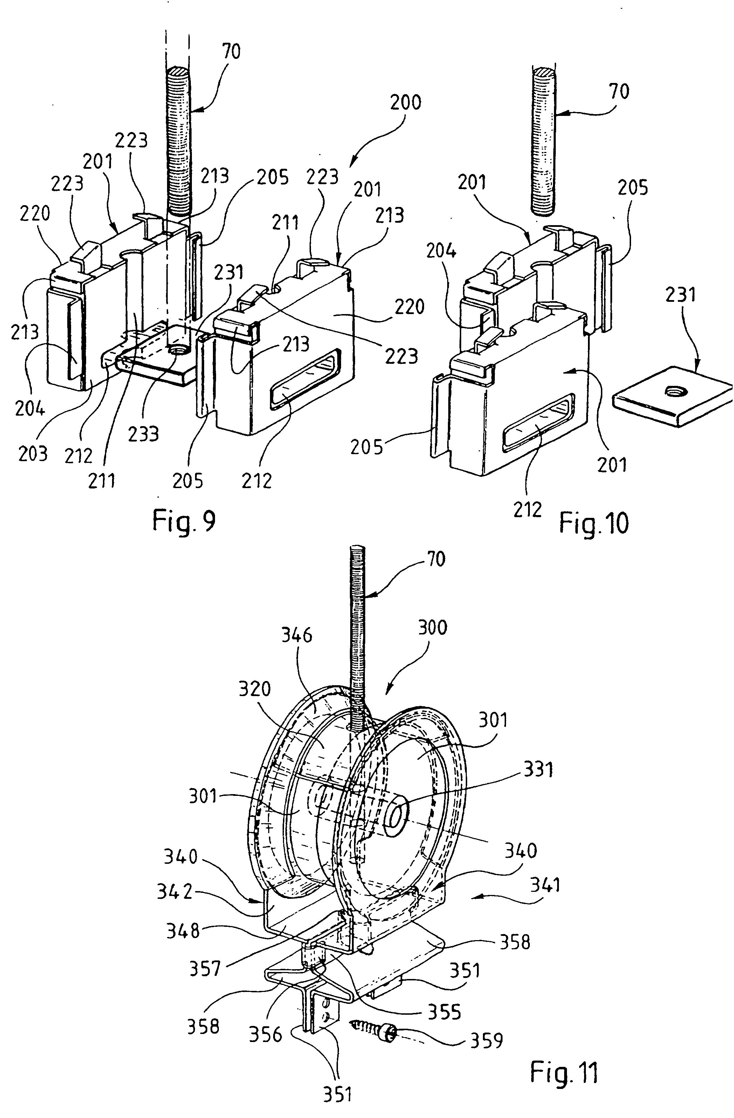

La figure 9 montre une variante de bloc élastique réalisé en deux pièces rigoureusement identiques ; chaque demi-bloc 201 du bloc élastique 200, ici de forme générale parallélépipédique, comprend une enveloppe 220 métallique recouvrant quatre faces d'un bloc en matière élastique 203, à savoir une grande face dite arrière et les trois faces adjacentes à la face arrière : une supérieure et deux latérales.

L'enveloppe 220 présente à la partie supérieure deux ergots 223, analogues aux ergots 123 de la figure 8 ; sur ses deux côtés latéralement opposés, l'enveloppe 220 présente, d'une part, un rebord droit 204 et, d'autre part, un rebord plié en U référencé 205 définissant une rainure ouverte vers l'intérieur disposée dans le même plan que le rebord droit 204 en sorte qu'elle est adaptée à recevoir le bord droit 204 de l'autre demi-bloc 201 lorsque les deux demi-blocs 201, présentés face à face tête-bêche d'abord légèrement décalés, sont ensuite mis en coïncidence, comme cela est illustré par la figure 10.

Le bloc en matière élastique 203 de chaque demi-bloc 201 présente centralement, sur sa grande face, dite face avant, non recouverte par l'enveloppe 220, une saignée 211 semi-cylindrique s'étendant sur toute sa hauteur parallèlement aux rebords droit 204 et plié 205 et constituant un demi-puits central.

Chaque demi-bloc 201 présente également, au voisinage de sa partie inférieure, un passage traversant 212 s'étendant transversalement par rapport à la saignée 211 et de section globalement rectangulaire ; les deux passages 212 des demi-blocs 201 sont destinés à recevoir un organe porteur 231, ici en forme de plaque rectangulaire, percé centralement d'un taraudage 233 pour coopération avec la tige filetée 70.

Lorsque les rebords droits 204 coopèrent avec les bords pliés 205, l'introduction de l'organe porteur 231 dans les passages 212 et de la tige filetée 70 dans le puits central constitué par les deux saignées 211 alors en regard assemble les deux demi-blocs 201 immobilisés ainsi, l'un par rapport à l'autre, dans toutes les directions.

On comprend que la première portée du bloc élastique 200 est assurée par la face supérieure du passage 212, et sa seconde portée est constituée par les arêtes latérales 213 des enveloppes 220 qui sont analogues aux arêtes 113 du bloc élastique 100 de la figure 8.

Pour faciliter le réglage en hauteur, l'organe porteur 231 peut être réalisé en forme de disque d'un diamètre supérieur à l'épaisseur du bloc élastique 200 assemblé en sorte qu'il est possible de le tourner depuis l'extérieur du bloc élastique 200.

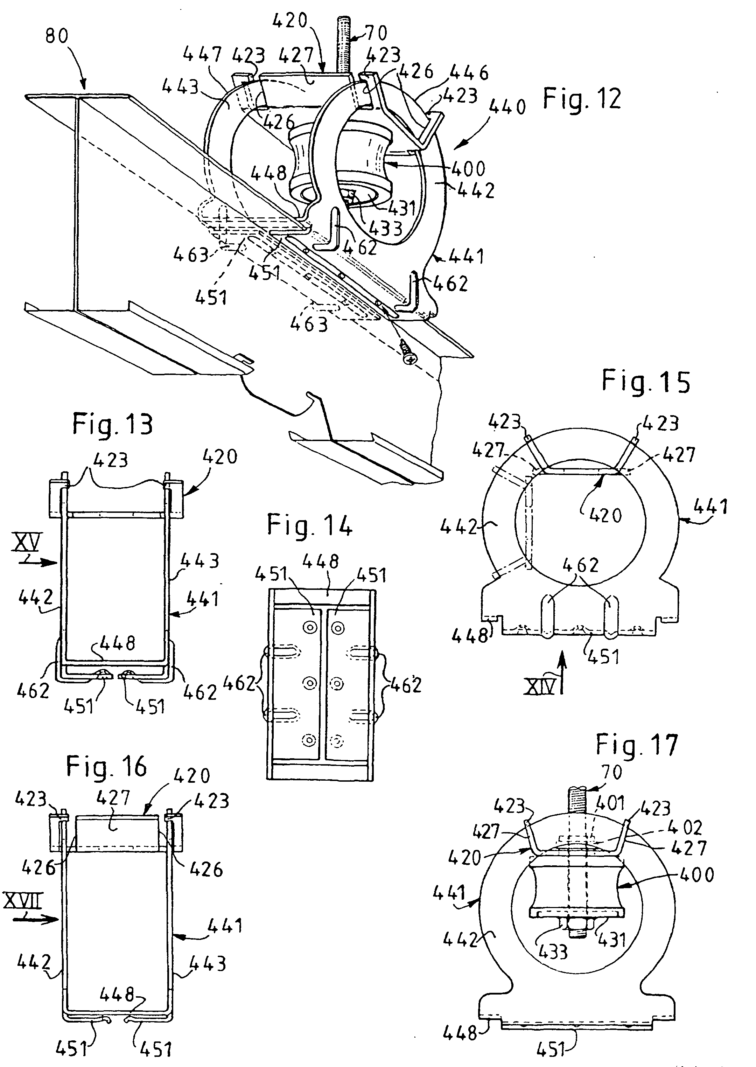

La figure 11 représente en perspective une autre variante d'ensemble d'attache selon l'invention.

Ici le corps 341 en U du second moyen d'attelage est en deux pièces ; chaque demi-corps 340 comprend un flasque 342 ayant un rebord 346, ici de forme tronconique, constituant la portion de rail et une demi-âme 348 prolongée vers le bas, par rapport à la figure, par une paroi 355 s'étendant à angle droit vers l'extérieur par rapport à la demi-âme 348 ; la paroi 355 porte latéralement d'un côté un bord droit et de l'autre côté un bord plié 356 analogue au bord plié 205 de l'enveloppe 220 de la variante précédente en sorte que les deux demi-corps 340 sont assemblés de la même façon que celle décrite à propos des deux demi-blocs 201 de la variante précédente ; pour leur verrouillage en position, une clavette 357 est introduite dans un puits central constitué par la mise en coïncidence de deux demi-puits dont chacun est obtenu par déformation de la paroi 355 et de la demi-aile 348.

La paroi 355 est prolongée extérieurement, vers le bas, par un pli 358, globalement parallèle à la demi-âme 348 et d'où sont issues deux pattes 351 de fixation situées dans le plan de la paroi 355 ; les pattes 351 permettent la fixation du second moyen d'attelage 341, par exemple par des vis autotaraudeuses 359, à l'élément porteur ou porté.

Le bloc élastique 300 est ici également en deux pièces ; chaque demi-bloc 301 en matière élastique est de forme annulaire ; les deux demi-blocs 301 sont traversés transversalement en leur centre par une douille 331 constituant l'organe porteur et munie d'un taraudage diamétral pour recevoir la tige filetée 70.

L'assemblage et la mise en oeuvre de cet ensemble d'attache découle de la description ci-dessus. On appréciera que, grâce à la forme tronconique des rebords 346, cet ensemble peut supporter de fortes charges sans risque d'écartement des deux flasques 342.

Les demi-blocs 301 peuvent coopérer directement avec les rebords 346; dans la variante représentée, une plaque d'appui 320, semi-cylindrique, est interposée.

Ici, une clavette 357 verrouille les deux demi-corps 340 en position ; en variante, la tige filetée 70 est prévue assez longue pour pouvoir jouer ce rôle.

Selon la variante de la figure 12, le bloc élastique 400 de forme générale cylindrique est traversé axialement par la tige filetée 70 et coopère, d'un côté, avec l'organe porteur 431 en forme de rondelle associée à un écrou 433 vissé sur la tige filetée 70 et, de l'autre côté, avec une plaque d'appui 420 agrafée sur le bloc élastique 400 : à cet effet, le bloc élastique 400 est prolongé par un collet 401 cylindrique, comme visible sur la figure 17, traversé par la tige 70 et bordé par une collerette 402, la plaque d'appui 420 étant dès lors maintenue axialement entre la face externe du bloc élastique 400 proprement dit et ladite collerette 402.

Le corps 441, en forme générale de U, du second moyen d'attelage 440, a des flasques 442, 443 dont la tranche externe constitue elle-même la portion de rail cylindrique 446, 447.

L'âme 448 du corps 441 en U porte deux pattes 451 qui ici s'étendent chacune sur une bonne partie de la longueur de l'âme 448.

Des nervures 462, 463 ménagées transversalement par rapport à la ligne de jonction des pattes 451 et des flasques 442, 443 rigidifient le corps 441.

Pour faire supporter le bloc élastique 400 par le corps 441, la plaque d'appui 420 présente latéralement des ergots 423, ici deux paires d'ergots, obtenus par découpe et pliage des bords 427 de la plaque d'appui 420 ; ces ergots 423 viennent partiellement fermer une fente 426 ménagée en bordure des bords 427 et dans laquelle prennent place les parties périphériques en forme de couronne des flasques 442, 443 dont les portions de rail 446, 447 coopèrent avec lesdits ergots 423.

La mise en place de la plaque d'appui 420 est effectuée en mettant à profit la flexibilité des flasques 442, 443 qui, dans un premier temps, sont écartés l'un de l'autre pour introduire entre eux la plaque d'appui 420 jusqu'au droit des ouvertures centrales des flasques 442, 443 ; dans un deuxième temps, on déplace la plaque d'appui 420 pour introduire les parties périphériques des flasques 442, 443 dans lesdites fentes 426.

Les figures 13 à 15 représentent une variante dans laquelle la plaque d'appui 420, représentée seule, sans le bloc élastique qu'elle supporte, ne diffère de la précédente que par le fait que les bords 427, plus courts, s'étendent dans le plan de la plaque elle-même.

Le corps 441 représenté sur les figures 16 et 17 est analogue à celui des figures 12 à 15 mais ne présente pas de nervures 462,463.

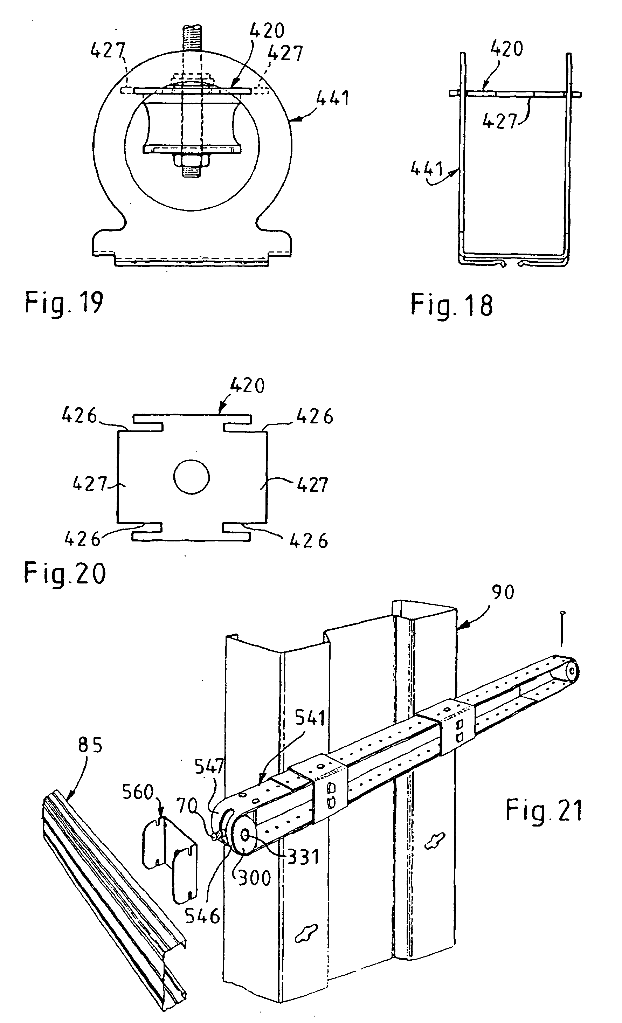

Selon les figures 18 à 20, la plaque d'appui 420 est entièrement plane, les fentes 426 et les bords 424 étant toutes et tous dans un même plan, celui de la plaque elle-même.

Dans ce qui précède, l'ensemble d'attache a été représenté dans une position correspondant à une utilisation comme suspente ; bien entendu, un tel ensemble peut être utilisé pour relier deux éléments non disposés l'un au dessus de l'autre.

La figure 21 illustre schématiquement une telle application.

Ici, un profilé 90, à section en oméga, disposé globalement verticalement, supporte une première cloison tandis qu'un profilé 85, à section en forme de C, disposé globalement horizontalement, supporte une seconde cloison ; le bloc élastique 300 est du genre de celui de la figure 11 ; la tige filetée 70 est disposée horizontalement et coopère avec une douille 331 munie d'un taraudage diamétral ; dans cette forme représentée, le corps 541 est en forme de U : les ailes du U sont de longueur réglable et l'âme du U, cylindrique, est munie d'une ouverture longitudinale dans sa zone médiane, traversée par la tige filetée 70, et définissant deux portions de rail cylindrique 546, 547 ; un adaptateur 560 permet de relier la tige filetée 70 au profilé 85.

## Revendications

1. Ensemble d'attache anti-vibrations destiné à relier un élément dit porté à un élément dit porteur, comportant un bloc élastique (10,100,200,300, 400) et des moyens d'attelage, le bloc étant constitué d'au moins un bloc de matière élastique, muni de deux portées (12,13,113) à distance l'une de l'autre, ces portées (12,13,113) coopérant chacune avec un moyen d'attelage (30,40) pour atteler l'ensemble, d'une part, à l'élément porteur et, d'autre part, à l'élément porté, l'un des moyens d'attelage (30) dit premier moyen d'attelage étant constitué d'un organe dit porteur (31,231,331,431) coopérant avec l'une des portées (12) du bloc élastique (10,100,200,300,400) dite première portée et portant intérieurement un taraudage (33,233) avec lequel est adaptée à coopérer une tige filetée (70) attelable à l'un des éléments porteur et porté, **caractérisé par le fait que** l'autre moyen d'attelage (40) dit second moyen d'attelage est constitué d'un corps (41,141,241,341,441,541) présentant au moins une portion de rail courbe (46,47,446,447,546,547) coopérant avec l'autre portée (13,113) dite seconde portée du bloc élastique (10,100,200,300), ledit corps (41,141,241,341,441,541) comportant en outre des moyens d'accrochage (51,151,351,52,152,451) par lesquels il est attelé à l'autre des éléments porté et porteur, et **par le fait que** le corps (41,141,241,341,441,541) peut tourner par rapport au bloc élastique (10,100,200,300,400) de telle sorte que l'élément attelé au corps (41,141,241,341,441,541) puisse être incliné par rapport à la tige filetée (70).

2. Ensemble d'attache selon la revendication 1, **caractérisé par le fait que** la première portée (12) du bloc élastique (10) est une face plane externe qu'il présente et dans laquelle débouche un puits central (11) qui traverse le bloc élastique (10,100), l'organe porteur (31) du premier moyen d'attelage (30) étant en forme de disque et solidaire d'un tube (32) muni intérieurement d'un taraudage (33) pour recevoir la tige filetée (70).

3. Ensemble d'attache selon la revendication 2, **caractérisé par le fait que** le tube (32) porte, au voisinage de son extrémité opposée à celle par laquelle il est solidarisé à l'organe porteur (31), une collerette (34) destinée à immobiliser axialement le tube (32) par rapport au bloc élastique (10,100).

4. Ensemble d'attache selon la revendication 1, **caractérisé par le fait que** la première portée du bloc élastique (200,300) est la face dirigée vers l'intérieur d'un passage transversal (212) que comprend le bloc élastique (200,300) et dans lequel est introduit transversalement l'organe porteur (231,331) du premier moyen d'attelage, le taraudage (233) porté par ledit organe porteur (231,331) étant au droit d'un puits central (211) qui traverse le bloc élastique (200,300) et qui est adapté à recevoir la tige filetée (70).

5. Ensemble d'attache selon la revendication 4, **caractérisé par le fait que** le passage transversal (212) est de forme générale parallélépipédique et l'organe porteur (231) est une plaque.

6. Ensemble d'attache selon la revendication 4, **caractérisé par le fait que** le passage transversal est de forme générale cylindrique et l'organe porteur (331) est une douille.

7. Ensemble d'attache selon l'une des revendications 1 à 6, **caractérisé par le fait que** la seconde portée du bloc élastique (10,100,200,300,400) est constituée de deux demi-secondes portées placées latéralement de part et d'autre du bloc élastique (10,100,200,300,400), le corps (41,141,241,341,441) du second moyen d'attelage (40) présentant deux portions de rail, chaque demi-seconde portée coopérant chacune avec une portion de rail.

8. Ensemble d'attache selon la revendication 7, **caractérisé par le fait que** le corps (41,141,241) du second moyen d'attelage (40) comprend deux flasques (42,43,242,243) ayant des rebords courbes (46,47) en regard l'un de l'autre constituant chacun une portion de rail.

9. Ensemble d'attache selon la revendication 7, **caractérisé par le fait que** le corps (341) du second moyen d'attelage comprend deux flasques (342) ayant des rebords tronconiques (346) en regard l'un de l'autre constituant chacun une portion de rail.

10. Ensemble d'attache selon l'une des revendications 8 ou 9, **caractérisé par le fait que** chaque rebord (46,47,346) s'étend selon un angle supérieur à 180 degrés, avantageusement de l'ordre de 280 degrés.

11. Ensemble d'attache selon la revendication 7, **caractérisé par le fait que** le corps (441) du second moyen d'attelage comprend deux flasques (442,443) dont les tranches externes constituent chacune une portion de rail.

12. Ensemble d'attache selon l'une des revendications 7 à 11, **caractérisé par le fait que** chaque demi-seconde portée est la face externe des extrémités latérales d'une plaque d'appui (20,120,220,320,420) supportée par le bloc élastique (10,100,200,300).

13. Ensemble d'attache selon la revendication 12, **caractérisé par le fait que** la plaque d'appui (20,120,220) présente latéralement, au droit de chaque demi-seconde portée, au moins deux ergots (23,123,223,423) parallèles à et à distance de ladite demi-seconde portée grâce auxquels le bloc élastique (10,100,200,400) est guidé et supporté par le corps (41,141,241,441) du second moyen d'attelage.

14. Ensemble d'attache selon l'une des revendications 7 à 11, **caractérisé par le fait que** chaque demi-seconde portée est la face externe des extrémités latérales du bloc élastique (10,100,200).

15. Ensemble d'attache selon l'une des revendications 7 à 11, **caractérisé par le fait que** chaque demi-seconde portée est une face d'une rainure latérale ménagée dans le bloc élastique.

16. Ensemble d'attache selon l'une des revendications 7 à 15, **caractérisé par le fait que** le bloc élastique (10) est en forme de secteur.

17. Ensemble d'attache selon l'une des revendications 7 à 15, **caractérisé par le fait que** le bloc élastique (100,200) est de forme parallélépipédique.

18. Ensemble d'attache selon l'une des revendications 7 à 15, **caractérisé par le fait que** le bloc élastique (300) est de forme cylindrique.

19. Ensemble d'attache selon l'une des revendications 7 à 18, **caractérisé par le fait que** le bloc élastique (10,100) est en une seule pièce.

20. Ensemble d'attache selon l'une des revendications 7 à 18, **caractérisé par le fait que** le bloc élastique (200,300) est en deux pièces.

21. Ensemble d'attache selon l'une des revendications 8 à 20, **caractérisé par le fait que** le corps (41,141) du second moyen d'attelage (40) est en forme générale d'un U dont les ailes sont constituées par les flasques (42,43,342) et dont l'âme (48,348) porte les moyens d'accrochage (51,52,152,154,351) de l'ensemble de suspente.

22. Ensemble d'attache selon la revendication 21, **caractérisé par le fait que** les moyens d'accrochage sont agencés pour coopérer avec un profilé, par exemple en forme de I et comprennent deux paires de pattes (51,52), dont chaque paire comprend deux pattes se faisant face, destinées à chevaucher les bords de l'aile (81) du profilé (80).

23. Ensemble d'attache selon la revendication 22, **caractérisé par le fait que** le corps (41) est également adapté à recevoir l'âme d'un adaptateur d'accrochage (93) en U dont les ailes (95) sont découpées en sorte de pouvoir s'adapter à l'une (91) des ailes en U d'un profilé en oméga (90).

24. Ensemble d'attache selon la revendication 21, **caractérisé par le fait que** les moyens d'accrochage sont agencés pour coopérer avec une aile (81) d'un profilé (80), par exemple en forme de I, et comprennent deux pattes (154,155) destinées à chevaucher chacune un bord de l'aile (81) du profilé (80), les deux pattes étant à une distance (153) l'une de l'autre au moins égale à la largeur (82) de l'aile (81) du profilé (80) en sorte que le chevauchement est obtenu par rotation du corps (141) par rapport au profilé (80).

25. Ensemble d'attache selon la revendication 21, **caractérisé par le fait que** les moyens d'accrochage du corps (241) sont agencés pour coopérer avec un profilé (90) en forme de oméga et comprennent deux ailes (295) découpées en sorte de pouvoir s'adapter à l'une (91) des ailes en U du profilé (90).

26. Ensemble d'attache selon l'une des revendications 21 à 25, **caractérisé par le fait que** le corps (41,141,241) est d'une seule pièce.

27. Ensemble d'attache selon l'une des revendications 21 à 25, **caractérisé par le fait que** le corps (341) est en deux pièces (340).

28. Ensemble d'attache selon la revendication 27, **caractérisé par le fait que** les deux pièces (340) sont identiques et emboîtées l'une dans l'autre, leur position d'emboîtement étant verrouillée par une clavette (357).

29. Ensemble d'attache selon la revendication 27, **caractérisé par le fait que** les deux pièces (340) sont identiques et emboîtées l'une dans l'autre, leur position d'emboîtement étant verrouillée par la tige filetée (70).

30. Bloc élastique pour ensemble d'attache selon l'une des revendications 1 à 29, **caractérisé par le fait qu'**il est en forme de secteur et est muni d'une première portée (12), constituée par une face plane externe qu'il présente, et d'une seconde portée constituée de deux demi-secondes portées placées latéralement de part et d'autre du bloc élastique (10), chacune étant la face externe des extrémités latérales d'une plaque d'appui (20) supportée par le bloc élastique (10) et présentant au moins deux ergots (23), ledit bloc élastique (10) étant traversé par un puits central (11) qui débouche dans la première portée (12).

31. Corps pour ensemble d'attache selon l'une des revendications 1 à 29, **caractérisé par le fait qu'**il est en forme générale de U dont les ailes sont constituées par deux flasques (42) ayant des rebords courbes (46) en regard l'un de l'autre, et dont l'âme (48) porte les moyens d'accrochage (51,52).

## Patentansprüche

1. Schwingungsfeste Verbindungseinrichtung, die dazu bestimmt ist, ein so genanntes getragenes Element mit einem so genannten tragenden Element zu verbinden, umfassend einen elastischen Block (10, 100, 200, 300, 400) und Kupplungsmittel, wobei der Block aus mindestens einem Block aus elastischem Material gebildet wird, der mit zwei voneinander beabstandeten Auflagen (12, 13, 113) versehen ist, wobei diese Auflagen (12, 13, 113) jeweils mit einem Kupplungsmittel (30, 40) zusammenarbeiten, um die Einrichtung einerseits mit dem tragenden Element und andererseits mit dem getragenen Element zu verbinden, wobei eines der Kupplungsmittel (30), genannt erstes Kupplungmittel, aus einem so genannten tragenden Organ (31, 231, 331, 431) gebildet wird, das mit einer der Auflagen (12) des elastischen Blocks (10, 100, 200, 300, 400), genannt erste Auflage, zusammenarbeitet und innen ein Innengewinde (33, 233) trägt, mit dem ein Stab mit Außengewinde (70) zusammenarbeiten kann, der an eines der Elemente, gewählt aus dem tragenden und dem getragenen, gekoppelt werden kann, **dadurch gekennzeichnet, dass** das andere Kupplungsmittel (40), genannt zweites Kupplungsmittel, aus einem Körper (41, 141, 241, 341, 441, 541) gebildet wird, der mindestens einen gekrümmten Schienenteil (46, 47, 446, 447, 546, 547) aufweist, der mit der anderen Auflage (13, 113), genannt zweite Auflage, des elastischen Blocks (10, 100, 200, 300) zusammenarbeitet, wobei der Körper (41, 141, 241, 341, 441, 541) darüber hinaus Befestigungsmittel (51, 151, 351, 52, 152, 451) umfasst, durch die er an das andere Element, gewählt aus dem tragenden und dem getragenen, gekoppelt ist, und **dadurch**, dass sich der Körper (41, 141, 241, 341, 441, 541) in Bezug auf den elastischen Block (10, 100, 200, 300, 400) drehen kann, so dass das Element, das an den Körper (41, 141, 241, 341, 441, 541) gekoppelt ist, in Bezug auf den Stab mit Außengewinde (70) geneigt werden kann.

2. Verbindungseinrichtung nach Anspruch 1, **dadurch gekennzeichnet, dass** die erste Auflage (12) des elastischen Blocks (10) eine externe ebene Fläche ist, die er aufweist und in die eine zentrale Bohrung (11) einmündet, die den elastischen Block (10, 100) durchquert, wobei das tragende Organ (31) des ersten Kupplungsmittels (30) die Form einer Scheibe aufweist und mit einem Rohr (32) fest verbunden ist, das innen mit einem Innengewinde (33) versehen ist, um den Stab mit Außengewinde (70) aufzunehmen.

3. Verbindungseinrichtung nach Anspruch 2, **dadurch gekennzeichnet, dass** das Rohr (32) in der Nähe seines Endes, das jenem entgegengesetzt ist, mit dem es mit dem tragenden Organ (31) fest verbunden ist, einen Kragen (34) trägt, der dazu bestimmt ist, das Rohr (32) in Bezug auf den elastischen Block (10, 100) axial zu immobilisieren.

4. Verbindungseinrichtung nach Anspruch 1, **dadurch gekennzeichnet, dass** die erste Auflage des elastischen Blocks (200, 300) die Fläche ist, die zur Innenseite eines quer laufenden Durchlasses (212) hin gerichtet ist, die der elastische Block (200, 300) umfasst und in die in Querrichtung das tragende Organ (231, 331) des ersten Kupplungsmittels eingeführt ist, wobei sich das Innengewinde (233), das von dem tragenden Organ (231, 331) getragen wird, am Ort einer zentralen Bohrung (211) befindet, die den elastischen Block (200, 300) durchquert und die geeignet ist, den Stab mit Außengewinde (70) aufzunehmen.

5. Verbindungseinrichtung nach Anspruch 4, **dadurch gekennzeichnet, dass** der quer laufende Durchlass (212) eine im Allgemeinen parallelepipedische Form aufweist und das tragende Organ (231) eine Platte ist.

6. Verbindungseinrichtung nach Anspruch 4, **dadurch gekennzeichnet, dass** der quer laufende Durchlass eine im Allgemeinen zylindrische Form aufweist und das tragende Organ (331) eine Buchse ist.

7. Verbindungseinrichtung nach einem der Ansprüche 1 bis 6, **dadurch gekennzeichnet, dass** die zweite Auflage des elastischen Blocks (10, 100, 200, 300, 400) aus zwei halben zweiten Auflagen gebildet wird, die seitlich zu beiden Seiten des elastischen Blocks (10, 100, 200, 300, 400) angeordnet sind, wobei der Körper (41, 141, 241, 341, 441) des zweiten Kupplungsmittels (40) zwei Schienenteile aufweist und wobei die halben zweiten Auflagen jeweils mit einem Schienenteil zusammenarbeiten.

8. Verbindungseinrichtung nach Anspruch 7, **dadurch gekennzeichnet, dass** der Körper (41, 141, 241) des zweiten Kupplungsmittels (40) zwei Flansche (42, 43, 242, 243) umfasst, die einander gegenüberliegende gekrümmte Ränder (46, 47) aufweisen, die jeweils einen Schienenteil bilden.

9. Verbindungseinrichtung nach Anspruch 7, **dadurch gekennzeichnet, dass** der Körper (341) des zweiten Kupplungsmittels zwei Flansche (342) umfasst, die einander gegenüberliegende kegelstumpfförmige Ränder (346) aufweisen, die jeweils einen Schienenteil bilden.

10. Verbindungseinrichtung nach einem der Ansprüche 8 oder 9, **dadurch gekennzeichnet, dass** sich jeder Rand (46, 47, 346) über einen Winkel von über 180 Grad, vorzugsweise in der Größenordnung von 280 Grad, erstreckt.

11. Verbindungseinrichtung nach Anspruch 7, **dadurch gekennzeichnet, dass** der Körper (441) des zweiten Kupplungsmittels zwei Flansche (442, 443) umfasst, deren äußere Abschnitte jeweils einen Schienenteil bilden.

12. Verbindungseinrichtung nach einem der Ansprüche 7 bis 11, **dadurch gekennzeichnet, dass** jede halbe zweite Auflage die Außenseite der seitlichen Enden einer Stützplatte (20, 120, 220, 320, 420) ist, die vom elastischen Block (10, 100, 200, 300) getragen wird.

13. Verbindungseinrichtung nach Anspruch 12, **dadurch gekennzeichnet, dass** die Stützplatte (20, 120, 220) seitlich am Ort jeder halben zweiten Auflage mindestens zwei Vorsprünge (23, 123, 223, 423) aufweist, die parallel zu und beabstandet von der halben zweiten Auflage sind, wobei mit Hilfe dieser Vorsprünge der elastische Block (10, 100, 200, 400) geführt und vom Körper (41, 141, 241, 441) des zweiten Kupplungsmittels getragen wird.

14. Verbindungseinrichtung nach einem der Ansprüche 7 bis 11, **dadurch gekennzeichnet, dass** jede halbe zweite Auflage die Außenseite der seitlichen Enden des elastischen Blocks (10, 100, 200) ist.

15. Verbindungseinrichtung nach einem der Ansprüche 7 bis 11, **dadurch gekennzeichnet, dass** jede halbe zweite Auflage eine Seite einer seitlichen Rille ist, die in dem elastischen Block gebildet ist.

16. Verbindungseinrichtung nach einem der Ansprüche 7 bis 15, **dadurch gekennzeichnet, dass** der elastische Block (10) die Form eines Kreisausschnitts aufweist.

17. Verbindungseinrichtung nach einem der Ansprüche 7 bis 15, **dadurch gekennzeichnet, dass** der elastische Block (100, 200) eine parallelepipedische Form aufweist.

18. Verbindungseinrichtung nach einem der Ansprüche 7 bis 15, **dadurch gekennzeichnet, dass** der elastische Block (300) eine zylindrische Form aufweist.

19. Verbindungseinrichtung nach einem der Ansprüche 7 bis 18, **dadurch gekennzeichnet, dass** der elastische Block (10, 100) aus einem Stück gefertigt ist.

20. Verbindungseinrichtung nach einem der Ansprüche 7 bis 18, **dadurch gekennzeichnet, dass** der elastische Block (200, 300) aus zwei Stücken gefertigt ist.

21. Verbindungseinrichtung nach einem der Ansprüche 8 bis 20, **dadurch gekennzeichnet, dass** der Körper (41, 141) des zweiten Kupplungsmittels (40) die allgemeine Form eines U aufweist, dessen Flügel durch die Flansche (42, 43, 342) gebildet werden und dessen Steg (48, 348) die Befestigungsmittel (51, 52, 152, 154, 351) der Aufhängeeinrichtung trägt.

22. Verbindungseinrichtung nach Anspruch 21, **dadurch gekennzeichnet, dass** die Befestigungsmittel ausgebildet sind, um mit einem Profil, zum Beispiel in der Form eines I, zusammenzuarbeiten, und zwei Paare von Klauen (51, 52) umfassen, wobei jedes Paar zwei einander gegenüberliegende Klauen umfasst, die dazu bestimmt sind, die Ränder des Flügels (81) des Profils (80) zu überlappen.

23. Verbindungseinrichtung nach Anspruch 22, **dadurch gekennzeichnet, dass** der Körper (41) auch geeignet ist, den Steg eines U-förmigen Befestigungs-Adapters (93) aufzunehmen, dessen Flügel (95) so ausgeschnitten sind, dass sie sich an einen (91) der U-förmigen Flügel eines Omega-förmigen Profils (90) anpassen können.

24. Verbindungseinrichtung nach Anspruch 21, **dadurch gekennzeichnet, dass** die Befestigungsmittel ausgebildet sind, um mit einem Flügel (81) eines Profils (80), zum Beispiel in der Form eines I, zusammenzuarbeiten, und zwei Klauen (154, 155) umfassen, die dazu bestimmt sind, jeweils einen Rand des Flügels (81) des Profils (80) zu überlappen, wobei die beiden Klauen voneinander einen Abstand (153) aufweisen, der mindestens gleich der Breite (82) des Flügels (81) des Profils (80) ist, so dass die Überlappung durch die Rotation des Körpers (141) in Bezug auf das Profil (80) erzielt wird.

25. Verbindungseinrichtung nach Anspruch 21, **dadurch gekennzeichnet, dass** die Befestigungsmittel des Körpers (241) ausgebildet sind, um mit einem Omega-förmigen Profil (90) zusammenzuarbeiten, und zwei Flügel (295) umfassen, die so ausgeschnitten sind, dass sie sich an einen (91) der U-förmigen Flügel des Profils (90) anpassen können.

26. Verbindungseinrichtung nach einem der Ansprüche 21 bis 25, **dadurch gekennzeichnet, dass** der Körper (41, 141, 241) aus einem Stück gefertigt ist.

27. Verbindungseinrichtung nach einem der Ansprüche 21 bis 25, **dadurch gekennzeichnet, dass** der Körper (341) aus zwei Stücken (340) gefertigt ist.

28. Verbindungseinrichtung nach Anspruch 27, **dadurch gekennzeichnet, dass** die beiden Stücke (340) identisch und ineinandergeschachtelt sind, wobei ihre ineinandergeschachtelte Position durch einen Keil (357) verriegelt wird.

29. Verbindungseinrichtung nach Anspruch 27, **dadurch gekennzeichnet, dass** die beiden Stücke (340) identisch und ineinandergeschachtelt sind, wobei ihre ineinandergeschachtelte Position durch den Stab mit Außengewinde (70) verriegelt wird.

30. Elastischer Block für die Verbindungseinrichtung nach einem der Ansprüche 1 bis 29, **dadurch gekennzeichnet, dass** er die Form eines Kreisausschnitts aufweist und mit Folgendem versehen ist: mit einer ersten Auflage (12), die durch eine externe ebene Fläche gebildet wird, die er aufweist, und mit einer zweiten Auflage, die durch zwei halbe zweite Auflagen gebildet wird, die seitlich zu beiden Seiten des elastischen Blocks (10) angeordnet sind, wobei jede die Außenseite der seitlichen Enden einer Stützplatte (20) ist, die vom elastischen Block (10) getragen wird und mindestens zwei Vorsprünge (23) aufweist, wobei der elastische Block (10) von einer zentralen Bohrung (11) durchquert wird, die in die erste Auflage (12) einmündet.

31. Körper für die Befestigungseinrichtung nach einem der Ansprüche 1 bis 29, **dadurch gekennzeichnet, dass** er die allgemeine Form eines U aufweist, dessen Flügel durch zwei Flansche (42) gebildet werden, die einander gegenüberliegende gekrümmte Ränder (46) aufweisen, und dessen Steg (48) die Befestigungsmittel (51, 52) trägt.

## Claims

1. Anti-vibration fastener assembly intended to connect a so-called carried element to a so-called carrying element, comprising an elastic block (10, 100, 200, 300, 400) and coupling means, the block consisting of at least one block of elastic material, provided with two surfaces (12, 13, 113) at a distance from each other, these surfaces (12, 13, 113) each cooperating with a coupling means (30, 40) in order to couple the assembly firstly to the carrying element and secondly to the carried element, one of the coupling means (30), referred to as the first coupling means, consisting of a so-called carrying member (31, 231, 331, 431) cooperating with one of the surfaces (12) of the elastic block (10, 100, 200, 300, 400) referred to as the first surface and carrying internally a thread (33, 233) with which a threaded rod (70) that can be coupled to one of the carrying and carried elements is adapted to cooperate, **characterised by** the fact that the other coupling means (40), referred to as the second coupling means, consists of a body (41, 141, 241, 341, 441, 541) having at least one curved rail portion (46, 47, 446, 447, 546, 547) cooperating with the other surface (13, 113), referred to as the second surface, of the elastic block (10, 100, 200, 300), the said body (41, 141, 241, 341, 441, 541) also comprising hooking means (51, 151, 351, 52, 152, 451), by means of which it is coupled to the other one of the carried and carrying elements, and by the fact that the body (41, 141, 241, 341, 441, 541) can turn with respect to the elastic block (10, 100, 200, 300, 400) so that the element coupled to the body (41, 141, 241, 341, 441, 541) can be inclined with respect to the threaded rod (70).

2. Fastener assembly according to claim 1, **characterised by** the fact that the first surface (12) of the elastic block (10) is an external planar face that it has and in which there emerges a central well (11) that passes through the elastic block (10, 100), the carrying member (31) of the first coupling means (30) being in the form of a disc and fixed to a tube (32) provided internally with a thread (33) in order to receive the threaded rod (70).

3. Fastener assembly according to claim 2, **characterised by** the fact that the tube (32) carries, close to its end opposite to the one by means of which it is fixed to the carrying member (31), a collar (34) intended to immobilise the tube (32) axially with respect to the elastic block (10, 100).

4. Fastener assembly according to claim 1, **characterised by** the fact that the first surface of the elastic block (200,300) is the face directed towards the inside of a transverse passage (212) that the elastic block (200, 300) comprises in which the carrying member (231, 331) of the first coupling means is introduced transversely, the thread (233) carried by the said carrying member (231, 331) being in line with a central well (211) that passes through the elastic block (200, 300) and that is adapted to receive the threaded rod (70).

5. Fastener assembly according to claim 4, **characterised by** the fact that the transverse passage (212) is parallelepipedal in shape overall and the carrying member (231) is a plate.

6. Fastener assembly according to claim 4, **characterised by** the fact that the transverse passage is cylindrical in shape overall and the carrying member (331) is a socket.

7. Fastener assembly according to one of claims 1 to 6, **characterised by** the fact that the second surface of the elastic block (10, 100, 200, 300, 400) consists of two half second surfaces placed laterally on each side of the elastic block (10, 100, 200, 300, 400), the body (41, 141, 241, 341, 441) of the second coupling means (40) having two rail portions, each half second surface each cooperating with a rail portion.

8. Fastener assembly according to claim 7, **characterised by** the fact that the body (41, 141, 241) of the second coupling means (40) comprises two flanges (42, 43, 242, 243) having short edges (46, 47) facing each other, each constituting a rail portion.

9. Fastener assembly according to claim 7, **characterised by** the fact that the body (341) of the second coupling means comprises two flanges (342) having frustoconical edges (346) facing each other, each constituting a rail portion.

10. Fastener assembly according to one of claims 8 or 9, **characterised by** the fact that each edge (46, 47, 346) extends at an angle greater than 180°, advantageously around 280°.

11. Fastener assembly according to claim 7, **characterised by** the fact that the body (441) of the second coupling means comprises two flanges (442, 443), the external sides of which each constitute a rail portion.

12. Fastener assembly according to one of claims 7 to 11, **characterised by** the fact that each half second surface is the external face of the lateral ends of a support plate (20, 120, 220, 320, 420) supported by the elastic block (10, 100, 200, 300).

13. Fastener assembly according to claim 12, **characterised by** the fact that the support plate (20, 120, 220) has laterally, in line with each half second surface, at least two lugs (23, 123, 223, 423) parallel to and at a distance from the said half second surface, by means of which the elastic block (10, 100, 200, 400) is guided and supported by the body (41, 141, 241, 441) of the second coupling means.

14. Fastener assembly according to one of claims 7 to 11, **characterised by** the fact that each half second surface is the external face of the lateral ends of the elastic block (10, 100, 200).

15. Fastener assembly according to one of claims 7 to 11, **characterised by** the fact that each half second surface is a face of a lateral groove provided in the elastic block.

16. Fastener assembly according to one of claims 7 to 15, **characterised by** the fact that the elastic block (10) is in the form of a sector.

17. Fastener assembly according to one of claims 7 to 15, **characterised by** the fact that the elastic block (100, 200) is parallelepipedal in shape.

18. Fastener assembly according to one of claims 7 to 15, **characterised by** the fact that the elastic block (300) is cylindrical in shape.

19. Fastener assembly according to one of claims 7 to 18, **characterised by** the fact that the elastic block (10, 100) is in a single piece.

20. Fastener assembly according to one of claims 7 to 18, **characterised by** the fact that the elastic block (200, 300) is in two pieces.

21. Fastener assembly according to one of claims 8 to 20, **characterised by** the fact that the body (41, 141) of the second coupling means (40) is in the shape of a U overall, the wings of which consists of the flanges (42, 43, 342) and the web (48, 348) of which carries the hooking means (51, 52, 152, 154, 351) of the suspension assembly.

22. Fastener assembly according to claim 21, **characterised by** the fact that the attachment means are arranged to cooperate with a profiled section, for example in the form of an I and comprising two pairs of brackets (51, 52), each pair of which comprises two brackets facing each other intended to straddle the edges of the wing (81) of the profiled section (80).

23. Fastener assembly according to claim 22, **characterised by** the fact that the body (41) is also adapted to receive the web of a U-shaped fastening adapter (93), the wings (95) of which are cut out so as to be able to adapt to one (91) of the U-shaped wings of an omega-shaped profiled section (90).

24. Fastener assembly according to claim 21, **characterised by** the fact that the hooking means are arranged to cooperate with a wing (81) of a profiled section (80), for example in the form of an I, and comprising two brackets (154, 155) intended each to straddle an edge of the wing (81) of the profiled section (80), the two brackets being at a distance (153) from each other at least equal to the width (82) of the wing (81) of the profiled section (80) so that the straddling is obtained by rotation of the body (141) with respect to the profiled section (80).

25. Fastener assembly according to claim 21, **characterised by** the fact that the hooking means of the body (241) are arranged to cooperate with a profiled section (90) in the shape of an omega and comprising two wings (295) cut out so as to be able to fit on one (91) of the U-shaped wings of the profiled section.

26. Fastener assembly according to one of claims 21 to 25, **characterised by** the fact that the body (41, 141, 241) is in a single piece.

27. Fastener assembly according to one of claims 21 to 25, **characterised by** the fact that the body (341) is in two pieces (340).

28. Fastener assembly according to claim 27, **characterised by** the fact that the two pieces (34) are identical and fitted one in the other, their fitting position being locked by a key (357).

29. Fastener assembly according to claim 27, **characterised by** the fact that the two pieces (340) are identical and fitted one in the other, their fitting position being locked by the threaded rod (70).

30. Elastic block for a fastener assembly according to one of claims 1 to 29, **characterised by** the fact that it is in the form of a sector and is provided with a first surface (12), consisting of an external planar face that it has, and a second surface consisting of two half second surfaces places laterally on each side of the elastic block (10), each being the external face of the lateral ends of a support plate (20) supported by the elastic block (10) and having at least two lugs (23), the said elastic block (10) having pass through it a central well (11) which emerges in the first surface (12).

31. Body for a fastener assembly according to one of claims 1 to 29, **characterised by** the fact that it is in the shape of a U overall, whose wings consist of two flanges (42) having curved edges (46) facing each other, and whose web (48) carries the hooking means (51, 52).
